# EUROPÄISCHE PATENTSCHRIFT

(11) **EP 1 884 668 B1**
(45) Veröffentlichungstag und Bekanntmachung des Hinweises auf die Patenterteilung: **21.10.2009**
(21) Anmeldenummer: 06016313.6
(22) Anmeldetag: 04.08.2006
(51) Int. Cl.: F16B 35/04, F16B 25/10, E05D 5/02

(54) **Verbindungselement zum Anbringen eines Beschlagteils an einem Flügel oder einem Blendrahmen eines Fensters, einer Tür oder dergleichen**
Joining element for fixing a fitting to a wing or a fixed frame of a window, door or similar
Elément de liaison pour fixer une ferrure à un battant ou dormant de fenêtre, porte ou similaire

(43) Veröffentlichungstag der Anmeldung: 06.02.2008
(60) Teilanmeldung: 09009762.7
(73) Patentinhaber: ROTO FRANK AG, 70771 Leinfelden-Echterdingen (DE)
(72) Erfinder: Zaccaria, Giovanni, 70771 Leinfelden-Echterdingen (DE)
(74) Vertreter: Kohler Schmid Möbus

(56) Entgegenhaltungen:
- EP-A- 1 180 606
- EP-A1- 0 307 119
- DE-U1- 29 502 068

## Beschreibung

Die Erfindung betrifft eine Flügelanordnung eines Fensters, einer Tür oder dergleichen, mit einem Flügel sowie mit einem Beschlagteil, welches mittels eines Verbindungselementes an dem Flügel angebracht ist,
- wobei das Verbindungselement einen Schaft mit einer Schaftachse aufweist und unter Drehen des Schaftes um die Schaftachse in einer in Längsrichtung der Schaftachse verlaufenden Montagerichtung aus einer Außerfunktionsstellung in eine Montagestellung bewegbar ist, wobei der Schaft an der in Montagerichtung gelegenen Seite einen selbstschneidenden axialen Schaftabschnitt aufweist, auf den in Gegenrichtung der Montagerichtung ein axialer Passungsabschnitt des Schaftes folgt, der seinerseits einen Durchmesser besitzt, der mit dem Durchmesser des selbstschneidenden axialen Schaftabschnittes übereinstimmt oder der größer ist als dieser Durchmesser und
- wobei das Verbindungselement in der Montagelage das Beschlagteil an einem Beschlagteildurchtritt durchsetzt und mit dem axialen Passungsabschnitt des Schaftes in eine mittels des selbstschneidenden axialen Schaftabschnittes erstellte Passungsaufnahme an dem Flügel eingreift.

Die Erfindung betrifft des Weiteren eine entsprechende Blendrahmenanordnung sowie ein Fenster, eine Tür oder dergleichen mit einer Flügelanordnung und/oder mit einer Blendrahmenanordnung der genannten Art.

Gattungsgemäßer Stand der Technik ist offenbart in DE 295 02 068 U1. Aus dieser Druckschrift ist ein Fenster mit Fensterprofilen bekannt, an welchen Beschlagteile mittels Schrauben fixiert werden. Im Einzelnen beschreibt DE 295 02 068 U1 eine Schraube, die an dem in Montagerichtung voreilenden Ende ihres Schaftes eine Bohrspitze aufweist. In Richtung auf den Kopf der Schraube schließt sich an die Bohrspitze unmittelbar ein Gewindeabschnitt des Schaftes an. Auf den Gewindeabschnitt folgt ein radial erweiterter Schaftabschnitt, der schließlich in den Schraubenkopf übergeht. Zur Fixierung eines Beschlagteils an einem Fensterprofil wird eine Schraube der beschriebenen Art durch das auf dem betreffenden Fensterprofil aufliegende Beschlagteil hindurch in das Fensterprofil eingedreht. Die selbstschneidende Bohrspitze erstellt dabei Bohrungen an Wandungen des Fensterprofils. Bei montiertem Beschlagteil werden die Bohrungen von Profilwandungen im Inneren des Fensterprofils von dem Gewindeabschnitt der Schraube durchsetzt. Gleichzeitig kommt der radial erweiterte Schaftabschnitt der Schraube mit einem Teil seiner axialen Länge im Innern der mittels der Bohrspitze erstellten Bohrung an derjenigen Profilwandung zu liegen, die an ihrer Außenseite das zu fixierende Beschlagteil lagert. Über einen weiteren Teil seiner axialen Länge greift der radial erweiterte Schaftabschnitt der Schraube in einen Schraubendurchtritt an dem Beschlagteil ein. An der von dem Fensterprofil abliegenden Seite ist der Schraubendurchtritt an dem Beschlagteil mit einer Einsenkung versehen. Diese Einsenkung nimmt an dem montierten Beschlagteil den Kopf der Schraube auf. Eine wirksame, in Schraubenquerrichtung möglichst spielfreie Lagerung eines Beschlagteils an dem zugehörigen Fensterprofil setzt im Falle des Standes der Technik gemäß DE 295 02 068 U1 voraus, dass der radial erweiterte Schaftabschnitt und/oder der Kopf der Schraube einerseits, sowie der Schraubendurchtritt, bzw. dessen Einsenkung an dem Beschlagteil andererseits in ihrem Durchmesser maßgenau aufeinander abgestimmt sind.

Die Aufgabe der vorliegenden Erfindung besteht darin, eine Flügelanordnung, eine Blendrahmenanordnung sowie ein Fenster, eine Tür oder dergleichen bereitzustellen, an welcher beziehungsweise an welchem eine wirksame Beschlagteillagerung der bekannten Art auf vereinfachte Art und Weise realisiert ist.

Erfindungsgemäß gelöst wird diese Aufgabe durch die Merkmale der unabhängigen Patentansprüche 1, 9 und 17.

Im Falle der Erfindung wird demnach zum Anbringen eines Beschlagteils an einem Flügel oder einem Blendrahmen eines Fensters, einer Tür oder dergleichen ein Verbindungselement verwendet, dessen Schaft zusätzlich zu einem selbstschneidenden Abschnitt sowie einem Passungsabschnitt einen Gewindeabschnitt aufweist, der an der von dem selbstschneidenden Schaftabschnitt abliegenden Seite des Passungsabschnittes vorgesehen ist. In Montagerichtung des Verbindungselementes gesehen, eilt der Gewindeabschnitt an dem Schaft des erfindungsgemäßen Verbindungselementes dem Passungsabschnitt des Schaftes nach. Bei der Beschlagteilmontage erstellt der selbstschneidende Schaftabschnitt an dem betreffenden Flügel oder an dem betreffenden Blendrahmen eine Aufnahme für den Passungsabschnitt des Schaftes. Aufgrund der im Falle der Erfindung vorgesehenen Bemessung des Durchmessers des selbstschneidenden Schaftabschnittes einerseits und des Passungsabschnittes des Schaftes andererseits kann das Verbindungselement im montierten Zustand in Querrichtung seiner Schaftachse spielfrei in diejenige Aufnahme an dem Flügel oder dem Blendrahmen eingreifen, die zuvor mittels des selbstschneidenden Schaftabschnittes erstellt worden ist. Eine in Querrichtung der Schaftachse gleichermaßen spielfreie Verbindung lässt sich über den axialen Gewindeabschnitt an dem Schaft des Verbindungselementes zwischen diesem und dem an dem Flügel oder dem Blendrahmen anzubringenden Beschlagteil herstellen. Die letztgenannte Verbindung ist der Einfachheit halber als Schraubverbindung ausgeführt. Im Zusammenspiel bewirken die in Querrichtung der Schaftachse des Verbindungselementes spielfreie Abstützung des Verbindungselementes an dem Flügel oder dem Blendrahmen und die ebenfalls in Querrichtung der Schaftachse des Verbindungselementes spielfreie Abstützung des Beschlagteils an dem Verbindungselement eine in der genannten Richtung wirksame, spielfreie Lagerung des Beschlagteils an dem Flügel oder dem Blendrahmen.

Besondere Ausführungsarten der Anordnungen nach den unabhängigen Patentansprüchen 1 und 9 ergeben sich aus den abhängigen Patentansprüchen 2 bis 8, 17 und 10 bis 17.

Gemäß den Patentansprüchen 2 und 10 ist in bevorzugter Ausgestaltung der Erfindung an dem Schaft des Verbindungselementes zwischen dem selbstschneidenden Schaftabschnitt und dem Passungsabschnitt ein gegenüber dem selbstschneidenden Schaftabschnitt durchmesserreduzierter Zwischenabschnitt vorgesehen. Wird das zu montierende Beschlagteil bereits vor dem Einbringen des Verbindungselementes an dem betreffenden Flügel oder Blendrahmen angeordnet, so kann das Verbindungselement mit seinem selbstschneidenden Schaftabschnitt durch einen Durchtritt an dem Beschlagteil hindurch an dem Flügel oder dem Blendrahmen angesetzt werden. Dabei sorgt der durchmesserreduzierie Zwischenabschnitt an dem Schaft des Verbindungselementes dafür, dass der axiale Gewindeabschnitt des Schaftes in Montagerichtung des Verbindungselementes gesehen, auch bei geringer axialer Länge des selbstschneidenden Schaftabschnittes vor dem mit einem zugeordneten Innengewinde versehenen Durchtritt des Beschlagteils angeordnet ist, wenn der selbstschneidende Schaftabschnitt durch das Beschlagteil hindurch an dem Flügel oder dem Blendrahmen zur Anlage gebracht ist. Infolge der Durchmesserreduzierung des Zwischenabschnittes des Schaftes gegenüber dem selbstschneidenden axialen Schaftabschnitt ist die achsparallele Wand des Zwischenabschnittes an dem Schaft des Verbindungselementes von der Wand der mittels des selbstschneidenden Schaftabschnittes erstellten Aufnahme an dem Flügel oder dem Blendrahmen beabstandet. Beim Einschneiden des Verbindungselementes in den Flügel oder den Blendrahmen tritt daher keine das Einschneiden erschwerende Reibung zwischen dem axialen Zwischenabschnitt an dem Schaft des Verbindungselementes und der diesem gegenüberliegenden Wand der Aufnahme an dem Flügel oder dem Blendrahmen auf. Schneidet sich das Verbindungselement in ein Hohlprofil des betreffenden Flügels oder des betreffenden Blendrahmens ein, so wird aufgrund der Durchmesserreduzierung des axialen Zwischenabschnittes des Schaftes gegenüber dem selbstschneidenden Schaftabschnitt das Durchdringen der Wand des Hohlprofils mit dem selbstschneidenden Schaftabschnitt für den Monteur spürbar. Hat der selbstschneidende Schaftabschnitt des Verbindungselementes die betreffende Hohlprofilwand durchdrungen, so bewegt sich das in Montagerichtung druckbeaufschlagte Verbindungselement schlagartig in Montagerichtung. Für den Monteur wird dadurch der Zeitpunkt erkennbar, zu welchem er die zum Einschneiden erforderliche Druckbeaufschlagung des Verbindungselementes in Montagerichtung reduzieren kann. Aufgrund der mit der Durchmesserreduzierung gegenüber dem selbstschneidenden Schaftabschnitt verbundenen Durchmesserreduzierung des Zwischenabschnittes an dem Schaft des Verbindungselementes gegenüber der Wand der mittels des selbstschneidenden Schaftabschnittes erstellten Aufnahme kann das Verbindungselement die Aufnahme mit dem axialen Zwischenabschnitt des Schaftes ohne Kontakt mit der Wand der Aufnahme und folglich mit verhältnismäßig großer Geschwindigkeit in Montagerichtung passieren. Dadurch kann unter Umständen das Eintreiben des auf den durchmesserreduzierten Zwischenabschnitt entgegen der Montagerichtung folgenden Passungsabschnittes des Schaftes an dem Verbindungselement in die mittels des selbstschneidenden Schaftabschnittes erstellte Aufnahme an dem Flügel oder dem Blendrahmen erleichtert werden.

Das Einbringen des Passungsabschnittes an dem Schaft des Verbindungselementes in die zugeordnete Aufnahme an dem Flügel oder dem Blendrahmen vereinfacht sich jedenfalls aufgrund des in weiterer Ausgestaltung der Erfindung vorgesehenen kennzeichnenden Merkmals von Patentanspruch 3 sowie von Patentansprüch 11. Der anspruchsgemäße Übergangsabschnitt, der an dem Schaft des Verbindungselementes zwischen dem durchmesserreduzierten Zwischenabschnitt und dem Passungsabschnitt vorgesehen ist, sorgt für eine selbsttätige Zentrierung des Passungsabschnittes an dem Schaft des Verbindungselementes gegenüber der zugeordneten, mittels des selbstschneidenden Schaftabschnittes erstellten Aufnahme an dem Flügel oder dem Blendrahmen.

Im Falle der Erfindungsbauarten nach den Patentansprüchen 4 und 12 ist der Passungsabschnitt an dem Schaft des Verbindungselementes glattwandig ausgebildet. Auch dadurch vereinfacht sich das Eintreiben des Passungsabschnittes an dem Verbindungselement in die zugeordnete Aufnahme an dem Flügel oder dem Blendrahmen. Gleichzeitig lässt sich ein glattwandige Passungsabschnitt mit einem geringen fertigungstechnischen Aufwand herstellen.

Eine entgegen der Montagerichtung auf den Gewindeabschnitt des Schaftes folgende und den Gewindeabschnitt des Schaftes seitlich überragende Auflage des Verbindungselementes, wie sie ausweislich Patentanspruch 5 und Patentansprüch 13 in weiterer bevorzugter Ausgestaltung der Erfindung vorgesehen ist, gestattet es, das Verbindungselement und das zu montierende Beschlagteil durch Eindrehen des Verbindungselementes in das Beschlagteil gegeneinander zu verspannen. Durch ein derartiges Verspannen wird eine besonders wirksame, in Querrichtung der Schaftachse des Verbindungselementes spielfreie Verbindung zwischen dem Verbindungselement und dem Beschlagteil ermöglicht.

Die Patentansprüche 6 und 14 betreffen Ausführungsformen der erfindungsgemäßen Flügelanordnung bzw. der erfindungsgemäßen Blendrahmenanordnung, im Falle derer ein Beschlagteil mittels eines erfindungsgemäßen Verbindungselementes an einem Flügel- bzw. Blendrahmen-Hohlprofil angebracht ist.

Besitzt der Passungsabschnitt an dem Schaft des Verbindungselementes ein Durchmesser-Übermaß gegenüber dem selbstschneidenden Schaftabschnitt des Verbindungselementes, so resultiert daraus ein entsprechendes Durchmesser-Übermaß zwischen dem Passungsabschnitt an dem Schaft des Verbindungselementes einerseits und der mittels des selbstschneidenden Schaftabschnittes erstellten Aufnahme an dem Flügel oder dem Blendrahmen andererseits. Zwischen dem in der Montagestellung befindlichen Verbindungselement und dem Flügel bzw. dem Blendrahmen ergibt sich in diesem Fall eine Presspassung. Die Verbindung zwischen dem Verbindungselement und dem Flügel bzw. dem Blendrahmen und damit auch die Verbindung zwischen dem Beschlagteil und dem Flügel bzw. dem Blendrahmen ist folglich auch entgegen der Montagerichtung des Verbindungselementes lastaufnahmefähig. Eine zusätzliche Sicherung des montierten Beschlagteils gegen Bewegung entgegen der Montagerichtung des Verbindungselementes wird in weiterer vorteilhafter Ausgestaltung der Erfindung mittels eines zusätzlich zu dem Verbindungselement vorgesehenen Befestigungsmittels bewirkt (Patentansprüche7,15). Eine entgegen der Montagerichtung des Verbindungselementes wirksame Fixierung des Beschlagteils an dem Flügel oder dem Blendrahmen übernimmt das zusätzliche Befestigungsmittel auch dann, wenn der Durchmesser des Passungsabschnittes an dem Schaft des Verbindungselementes mit dem Durchmesser des selbstschneidenden Schaftabschnittes übereinstimmt. In jedem Fall kann das zusätzliche Befestigungsmittel dazu dienen, das betreffende Beschlagteil an dem zugehörigen Flügel oder Blendrahmen vorzufixieren, ehe ein erfindungsgemäßes Verbindungselement eingebracht wird.

Eine besonders praxisrelevante Anwendung des erfindungsgemäßen Verbindungselementes beschreiben die Patentansprüche 8 und 16. Als an einem Flügel oder an einem Blendrahmen anzubringendes Beschlagteil ist in diesem Fall ein Widerlagerbock einer Verstelleinrichtung eines Funktionsbeschlages vorgesehen, welcher den betreffenden Flügel mit dem betreffenden Blendrahmen relativ zu diesem bewegbar verbindet. Die Richtung, in welcher der genannte Funktionsbeschlag zu verstellen ist, verläuft in Querrichtung der Schaftachse des Verbindungselementes, welches den Widerlagerbock der Verstelleinrichtung an dem betreffenden Flügel oder Blendrahmen lagert. In dieser Richtung bietet das erfindungsgemäße Verbindungselement dem Widerlagerbock eine für diesen funktionsnotwendige, lastaufnahmefähige und spielfreie Abstützung.

Nachfolgend wird die Erfindung anhand beispielhafter schematischer Darstellungen näher erläutert. Es zeigen:
- Fig. 1: den ecklagerseitigen Bereich des Blendrahmens eines Dreh-/Kippfensters unter anderem mit einem Widerlagerbock einer Beschlag-Verstelleinrichtung und einem in einer Außerfunktionsstellung befindlichen Verbindungselement und
- Fign. 2 bis 5: Schnittdarstellungen der Anordnung gemäß Fig. 1 in unterschiedlichen Montagephasen.

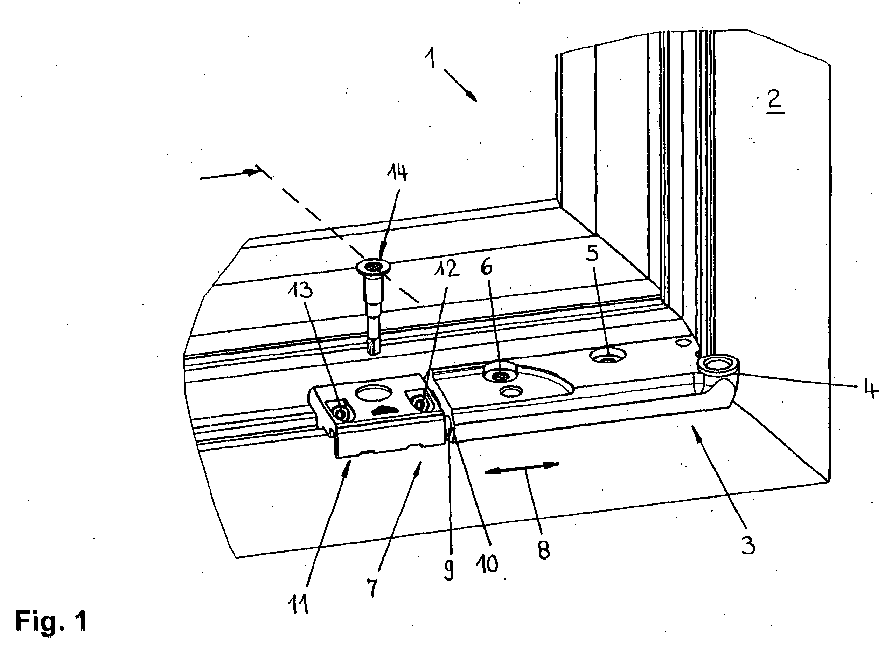

Gemäß Fig. 1 umfasst ein Fenster 1 eine Blendrahmenanordnung mit einem Blendrahmen 2. Ein dem Blendrahmen 2 zugeordneter Flügel des Fensters 1 ist der Einfachheit halber nicht dargestellt. An dem Blendrahmen 2 ist der Flügel im Bereich seiner unteren bandseitigen Ecke über ein Ecklager 3 abgestützt. Das Ecklager 3 weist ein Auflager 4 auf, in welches bei montiertem Flügel ein an dem Flügel angebrachter Lagerbolzen eingreift. Über das Auflager 4 des Ecklagers 3 und den flügelseitigen Lagerbolzen ist der Flügel an dem Blendrahmen 2 in üblicher Weise um eine vertikale Achse drehbar sowie um eine horizontale Achse kippbar gelagert. Insofern bildet das Ecklager 3 einen Funktionsbeschlag des Fensters 1.

Mit dem Blendrahmen 2 ist das Ecklager 3 über zwei Verbindungsschrauben 5, 6 verschraubt. Eine Verstelleinrichtung 7 dient zur Justage des Ecklagers 3 in Richtung eines Doppelpfeils 8.

Teil der Verstelleinrichtung 7 ist eine in Fig. 1 andeutungsweise erkennbare Stellschraube 9, die einerseits in eine Gewindebohrung 10 des Ecklagers 3 eingreift und andererseits an einem Beschlagteil in Form eines Widerlagerbockes 11 der Verstelleinrichtung 7 drehbar aber in axialer Richtung unverschiebbar abgestützt ist.

In der Montagephase gemäß Fig. 1 ist das Ecklager 3 über die Verbindungsschrauben 5, 6 an dem Blendrahmen 2 fixiert. Der Widerlagerbock 11 der Verstelleinrichtung 7 ist mit Hilfe von Befestigungsmitteln in Form von Befestigungsschrauben 12, 13 an dem Blendrahmen 2 vormontiert. In Richtung des Doppelpfeils 8 nimmt der Widerlagerbock 11 seine endgültige Stellung ein. Ein zusätzlich zu den Befestigungsschrauben 12, 13 vorgesehenes Verbindungselement 14 zum Anbringen des Widerlagerbocks 11 an dem Blendrahmen 2 befindet sich in einer Außerfunktionsstellung.

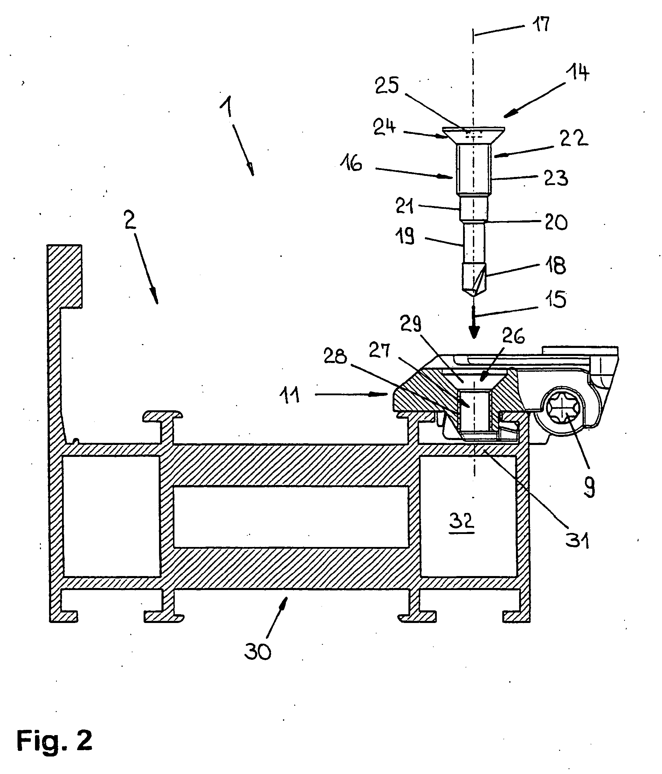

Fig.2 zeigt die Anordnung gemäß Fig. 1 in einem Schnitt entlang einer Schnittebene, deren Verlauf in Fig. 1 gestrichelt angedeutet ist.

Ein Pfeil 15 veranschaulicht in Fig. 2 die Montagerichtung des Verbindungselementes 14. Das Verbindungselement 14 selbst umfasst einen Schaft 16 mit einer Schaftachse 17, die ihrerseits parallel zu der Montagerichtung 15 des Verbindungselementes 14 verläuft. An dem in Montagerichtung 15 gelegenen Ende weist der Schaft 16 des Verbindungselementes 14 einen als Bohrspitze 18 ausgeführten selbstschneidenden axialen Schaftabschnitt auf. An diesen schließt sich entgegen der Montagerichtung 15 ein Zwischenabschnitt 19 des Schaftes 16 an. Der Zwischenabschnitt 19 des Schaftes 16 besitzt zylindrische Gestalt und ist gegenüber der Bohrspitze 18 bzw. gegenüber deren Hüllkreis durchmesserreduziert. Ein axialer Übergangsabschnitt 20 des Schaftes 16 bildet den Übergang zwischen dem Zwischenabschnitt 19 und einem axialen Passungsabschnitt 21 des Schaftes 16. Der axiale Übergangsabschnitt 20 besitzt die Form eines Kegelstumpfes und erweitert sich von dem Durchmesser des Zwischenabschnittes 19 auf den Durchmesser des Passungsabschnittes 21 des Schaftes 16. Der Passungsabschnitt 21 besitzt ebenso wie der Zwischenabschnitt 19 des Schaftes 16 Zylinderform. Seine achsparallele Mantelfläche ist glatt. Der Durchmesser des Passungsabschnittes 21 ist geringfügig größer als der Durchmesser der Bohrspitze 18 des Schaftes 16.

Auf den Passungsabschnitt 21 folgt in Gegenrichtung der Montagerichtung 15 ein axialer Gewindeabschnitt 22 des Schaftes 16. Der Gewindeabschnitt 22 ist mit einem Außengewinde 23 versehen, dessen Gewinde-Außendurchmesser den Durchmesser des Passungsabschnittes 21 übersteigt. An dem entgegen der Montagerichtung 15 gelegenen Ende wird der Schaft 16 des Verbindungselementes 14 von einem Kopf, im Einzelnen von einem Senkkopf 24 des Verbindungselementes 14 in radialer Richtung überragt. Der Senkkopf 24 weist einen herkömmlichen Innensechskant 25 als Eingriff für ein Montagewerkzeug auf.

An dem Widerlagerbock 11 der Verstelleinrichtung 7 zeigt Fig. 2 einen Beschlagteildurchtritt 26, welcher den Widerlagerbock 11 in Montagerichtung 15 des Verbindungselementes 14 durchdringt. Blendrahmenseitig umfasst der Beschlagteildurchtritt 26 eine zylindrische Gewindebohrung 27 mit einem Innengewinde 28.
An der dem Blendrahmen 2 gegenüberliegenden Seite setzt sich die Gewindebohrung 27 in einer Einsenkung 29 des Beschlagteildurchtrittes 26 fort.

Das Innengewinde 28 an dem Widerlagerbock 11 und das Außengewinde 23 an dem Verbindungselement 14 sind einander zugeordnet und dementsprechend aufeinander abgestimmt ausgeführt. Der Gewinde-Innendurchmesser des Innengewindes 28 an dem Widerlagerbock 11 ist größer als der Durchmesser des Passungsabschnittes 21 an dem Schaft 16 des Verbindungselementes 14.

Im Übrigen ist aus Fig. 2 ersichtlich, dass der mit dem Ecklager 3 und dem Widerlagerbock 11 versehene Holm des Blendrahmens 2 von einem Blendrahmen-Hohlprofil 30 gebildet wird. Der Widerlagerbock 11 ist nahe einer Profilwand 31 an einer Beschlagteilnut angeordnet. Die Profilwand 31 begrenzt einen Hohlraum 32 des Blendrahmen-Hohlprofils 30.

Die Abläufe beim Einbringen des Verbindungselementes 14 ergeben sich mit ihrer chronologischen Abfolge aus den Fign. 2 bis 5.

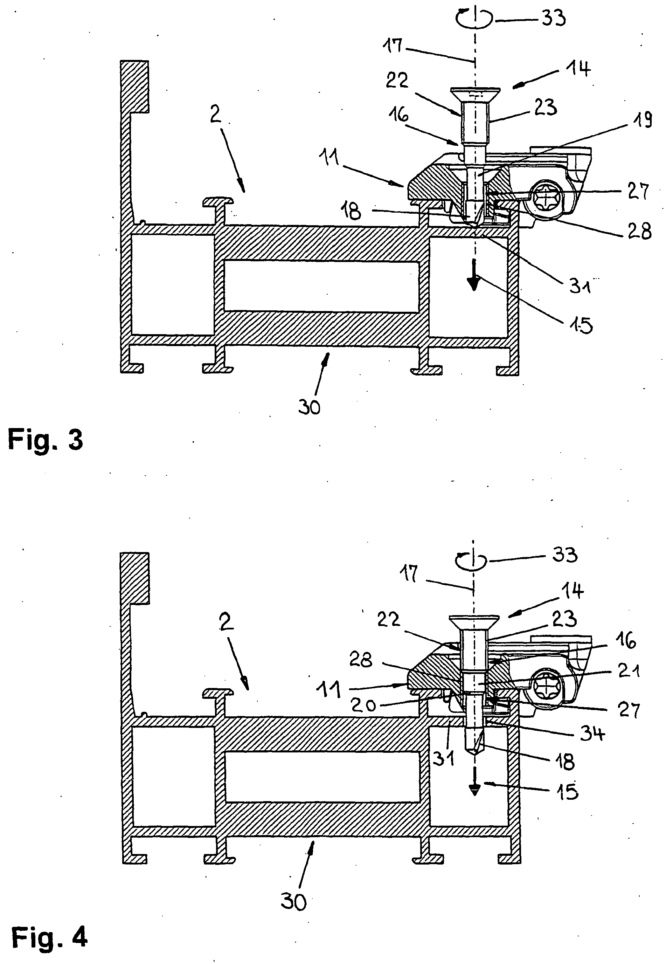

Ausgehend von seiner Außerfunktionsstellung gemäß Fig. 2 wird das Verbindungselement 14 in der aus Fig. 3 ersichtlichen Weise durch den vormontierten Widerlagerbock 11 hindurch an dem Blendrahmen 2 angesetzt. Mit der Bohrspitze 18 beaufschlagt das Verbindungselement 14 die Profilwand 31 des Blendrahmen-Hohlprofils 30. Dabei sind die Bohrspitze 18 und der Zwischenabschnitt 19 an dem Schaft 16 des Verbindungselementes 14 jeweils zum Teil im Inneren der Gewindebohrung 27 an dem Widerlagerbock 11 angeordnet. Im Übrigen kommt das Verbindungselement 14 außerhalb der Gewindebohrung 27 des Widerlagerbockes 11 zu liegen.

Mittels eines herkömmlichen Schraubers wird nun das Verbindungselement 14 in einer Drehrichtung 33 um die Schaftachse 17 gedreht. Infolge dieser Drehbewegung schneidet sich die Bohrspitze 18 des Verbindungselementes 14 in die Profilwand 31 des Blendrahmen-Hohlprofils 30 ein. Dabei wird an der Profilwand 31 des Blendrahmen-Hohlprofils 30 eine Passungsaufnahme 34 erbohrt (Fig. 4), deren Durchmesser dem Durchmesser der Bohrspitze 18 des Verbindungselementes 14 entspricht. Mit dem Einschneiden der Bohrspitze 18 in den Blendrahmen 2 bewegt sich das Verbindungselement 14 in Montagerichtung 15. Das Außengewinde 23 an dem axialen Gewindeabschnitt 22 ist zunächst noch in Richtung der Schaftachse 17 von dem Innengewinde 28 an dem Widerlagerbock 11 beabstandet.

Sobald die Bohrspitze 18 an dem Verbindungselement 14 die Profilwand 31 des Blendrahmen-Hohlprofils 30 mit ihrem in Montagerichtung 15 voreilenden Ende durchdrungen hat, bewegt sich das Verbindungselement 14 schlagartig in Montagerichtung 15. Dabei läuft der Passungsabschnitt 21 an dem Schaft 16 des Verbindungselementes 14 in die gegenüber dem Passungsabschnitt 21 erweiterte Gewindebohrung 27 an dem Widerlagerbock 11 ein.

Die schlagartige Bewegung des Verbindungselementes 14 endet, sobald der Gewindeabschnitt 22 an dem Schaft 16 des Verbindungselementes 14 mit der in Montagerichtung 15 gelegenen Anfangswindung seines Außengewindes 23 auf der zugeordneten Anfangswindung des Innengewindes 28 an dem Widerlagerbock 11 aufsetzt. Es ergeben sich damit die Verhältnisse gemäß Fig. 4.

Die axialen Längen der einzelnen Abschnitte des Schaftes 16 an dem Verbindungselement 14 sind derart aufeinander sowie auf die Gegebenheiten an dem Widerlagerbock 11 abgestimmt, dass bei Auflage des Gewindeabschnittes 22 des Verbindungselementes 14 auf dem Rand der Gewindebohrung 27 an dem Widerlagerbock 11 der Passungsabschnitt 21 an dem Schaft 16 des Verbindungselementes 14 noch außerhalb der an der Profilwand 31 des Blendrahmen-Hohlprofils 30 erstellten Passungsaufnahme 34 liegt. Außerdem ist bei dem Montagezustand gemäß Fig. 4 die axiale Länge des Gewindeabschnittes 22 an dem Schaft 16 des Verbindungselementes 14 größer als der Abstand des in Montagerichtung gelegenen Endes des Passungsabschnittes 21 an dem Verbindungselement 14 von der dem Passungsabschnitt 21 zugewandten Begrenzungsfläche der Profilwand 31 an dem Blendrahmen-Hohlprofil 30.

Infolgedessen bewirkt eine fortgesetzte Drehbewegung des Verbindungselementes 14 in Drehrichtung 33 um die Schaftachse 17 ein Eintreiben des Passungsabschnittes 21 an dem Schaft 16 des Verbindungselementes 14 in die Passungsaufnahme 34 an der Profilwand 31 des Blendrahmen-Hohlprofils 30. Erzeugt wird die betreffende Vorschubbewegung des Verbindungselementes 14 in Montagerichtung 15 mittels des Gewindeantriebes, welchen das Innengewinde 28 an dem Widerlagerbock 11 und das damit kämmende Außengewinde 23 an dem Verbindungselement 14 bilden. Die Gewindeübersetzung gestattet es, den Passungsabschnitt 21 an dem Schaft 16 des Verbindungselements 14 mit verhältnismäßig geringem Kraftaufwand in die Passungsaufnahme 34 an der Profilwand 31 des Blendrahmen-Hohlprofils 30 einzuführen.

Erleichtert wird das Einführen des Passungsabschnittes 21 in die Passungsaufnahme 34 durch den zentrierend wirkenden Übergangsabschnitt 20 an dem Schaft 16 des Verbindungselementes 14. Infolge des Durchmesser-Übermaßes des Passungsabschnittes 21 an dem Verbindungselement 14 gegenüber der Passungsaufnahme 34 an der Profilwand 31 ergibt sich zwischen dem Verbindungselement 14 und dem Blendrahmen 2 eine Presspassung.

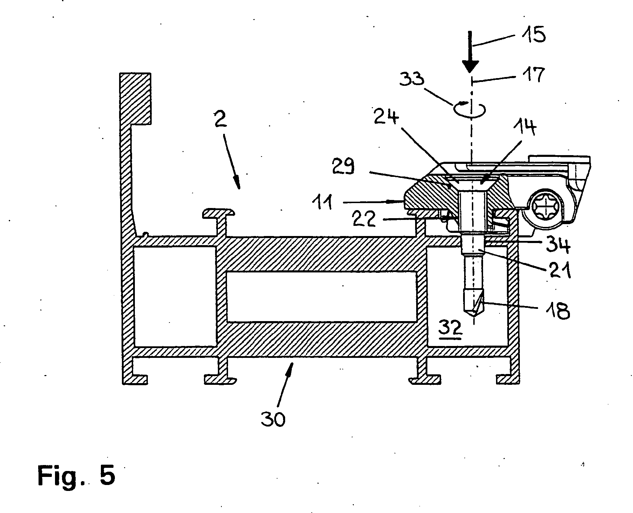

Seine endgültige Funktionsstellung hat das Verbindungselement 14 erreicht, sobald sein Senkkopf 24 auf die ihm gegenüberliegende Fläche der Einsenkung 29 an dem Widerlagerbock 11 aufgelaufen ist und das Verbindungselement 14 sowie der Widerlagerbock 11 gegeneinander verspannt sind (Fig. 5). Insbesondere zum gegenseitigen Verspannen von Verbindungselement 14 und Widerlagerbock 11 ist letzterer gegen Mitdrehen in der Drehrichtung 33 des Verbindungselementes 14 abzustützen. Für eine derartige Drehsicherung des Widerlagerbockes 11 sorgen unter anderem auch die Befestigungsschrauben 12, 13.

In dem Endmontagezustand gemäß Fig. 5 ist der Widerlagerbock 11 allseitig wirksam an dem Blendrahmen 2 fixiert. In Gegenrichtung der Montagerichtung 15 wird der Widerlagerbock 11 sowohl über die Presspassung von Verbindungselement 14 und Blendrahmen 2 als auch über die Befestigungsschrauben 12, 13 gehalten. In Querrichtung der Schaftachse 17 des Verbindungselementes 14 ist der Widerlagerbock 11 in erster Linie über die Gewindeverbindung mit dem Verbindungselement 14 und über dessen Abstützung an dem Blendrahmen 2 spielfrei gelagert. Die Befestigungsschrauben 12, 13 leisten auch in dieser Hinsicht einen Beitrag.

Alternativ zu den dargestellten Verhältnissen kann der Widerlagerbock 11 auch an einem Flügel einer Flügelanordnung zum Einsatz kommen. Die Montage erfolgt in diesem Fall analog zu der vorstehend im Einzelnen beschriebenen Montage an dem Blendrahmen 2.

## Patentansprüche

1. Flügelanordnung eines Fensters (1), einer Tür oder dergleichen, mit einem Flügel sowie mit einem Beschlagteil (11), welches mittels eines Verbindungselementes (14) an dem Flügel angebracht ist,
• wobei das Verbindungselement (14) einen Schaft (16) mit einer Schaftachse (17) aufweist und unter Drehen des Schaftes (16) um die Schaftachse (17) in einer in Längsrichtung der Schaftachse (17) verlaufenden Montagerichtung (15) aus einer Außerfunktionsstellung in eine Montagestellung bewegbar ist, wobei der Schaft (16) an der in Montagerichtung (15) gelegenen Seite einen selbstschneidenden axialen Schaftabschnitt (18) aufweist, auf den in Gegenrichtung der Montagerichtung (15) ein axialer Passungsabschnitt (21) des Schaftes (16) folgt, der seinerseits einen Durchmesser besitzt, der mit dem Durchmesser des selbstschneidenden axialen Schaftabschnittes (18) übereinstimmt oder der größer ist als dieser Durchmesser und
• wobei das Verbindungselement (14) in der Montagelage das Beschlagteil (11) an einem Beschlagteildurchtritt (26) durchsetzt und mit dem axialen Passungsabschnitt (21) des Schaftes (16) in eine mittels des selbstschneidenden axialen Schaftabschnittes (18) erstellte Passungsaufnahme (34) an dem Flügel eingreift,
**dadurch gekennzeichnet**
• **dass** an dem Verbindungselement (14) an der von dem selbstschneidenen axialen Schaftabschnitt (18) abliegenden Seite des axialen Passungsabschnittes (21) des Schaftes (16) ein axialer Gewindeabschnitt (22) des Schaftes (16) vorgesehen ist, welcher ein Außengewinde (23) aufweist, dessen Gewindeaußendurchmesser größer ist als der Durchmesser des axialen Passungsabschnittes (21) des Schaftes (16) und
• **dass** das Verbindungselement (14) in der Montagelage an dem Außengewinde (23) des axialen Gewindeabschnittes (22) des Schaftes (16) in dem Beschlagteildurchtritt (26) des Beschlagteils (11) mit einem zugeordneten Innengewinde (28) des Beschlagteils (11) kämmt, dessen Gewinde-Innendurchmesser mit dem Durchmesser des axialen Passungsabschnittes (21) des Schaftes (16) übereinstimmt oder größer ist als dieser Durchmesser.

2. Flügelanordnung nach Anspruch 1, **dadurch gekennzeichnet, dass** an dem Verbindungselement (14) zwischen dem selbstschneidenden axialen Schaftabschnitt (18) und dem axialen Passungsabschnitt (21) des Schaftes (16) ein gegenüber dem selbstschneidenden axialen Schaftabschnitt (18) durchmesserreduzierter axialer Zwischenabschnitt (19) des Schaftes (16) vorgesehen ist.

3. Flügelanordnung nach einem der vorhergehenden Ansprüche, **dadurch gekennzeichnet, dass** an dem Verbindungselement (14) zwischen dem durchmesserreduzierten axialen Zwischenabschnitt (19) des Schaftes (16) und dem axialen Passungsabschnitt (21) des Schaftes (16) ein axialer Übergangsabschnitt (20) des Schaftes (16) vorgesehen ist, der sich in Gegenrichtung der Montagerichtung (15) des Verbindungselementes (14) stetig von einem Durchmesser, der wenigstens dem Durchmesser des durchmesserreduzierten Zwischenabschnittes (19) entspricht, bis maximal auf den Durchmesser des axialen Passungsabschnittes (21) des Schaftes (16) erweitert.

4. Flügelanordnung nach einem der vorhergehenden Ansprüche, **dadurch gekennzeichnet, dass** an dem Verbindungselement (14) der axiale Passungsabschnitt (21) des Schaftes (16) glattwandig ausgebildet ist.

5. Flügelanordnung nach einem der vorhergehenden Ansprüche, **dadurch gekennzeichnet, dass** an dem Verbindungselement (14) an der von dem axialen Passungsabschnitt (21) des Schaftes (16) abgewandten Seite des axialen Gewindeabschnittes (22) des Schaftes (16) eine Auflage, vorzugsweise ein Kopf (24), des Verbindungselementes (14) vorgesehen ist, welche bzw. welcher den axialen Gewindeabschnitt (22) des Schaftes (16) in radialer Richtung der Schaftachse (17) überragt.

6. Flügelanordnung nach einem der vorhergehenden Ansprüche, **dadurch gekennzeichnet, dass** der Flügel ein Flügel-Hohlprofil aufweist und dass das Verbindungselement (14) in der Montagelage mit dem axialen Passungsabschnitt (21) des Schaftes (16) in eine mittels des selbstschneidenden axialen Schaftabschnittes (18) erstellte Passungsaufnahme (34) an dem Flügel-Hohlprofil eingreift und mit dem selbstschneidenden axialen Schaftabschnitt (18) in einem Hohlraum (32) im Innern des Flügel-Hohlprofils angeordnet ist.

7. Flügelanordnung nach einem der vorhergehenden Ansprüche, **dadurch gekennzeichnet, dass** das Beschlagteil (11) mittels eines zusätzlich zu dem Verbindungselement (14) vorgesehenen Befestigungsmittels (12, 13) an dem Flügel angebracht ist, wobei über das zusätzliche Befestigungsmittel (12, 13) eine in Gegenrichtung der Montagerichtung (15) des Verbindungselementes (14) wirksame Verbindung zwischen dem Beschlagteil (11) und dem Flügel hergestellt ist.

8. Flügelanordnung nach einem der vorhergehenden Ansprüche, **dadurch gekennzeichnet, dass** als Beschlagteil ein Widerlagerbock (11) einer Verstelleinrichtung (7) eines Funktionsbeschlages (3) vorgesehen ist, mittels dessen der Flügel mit einem Blendrahmen (2) relativ zu diesem bewegbar verbunden ist.

9. Blendrahmenanordnung eines Fensters (1), einer Tür oder dergleichen, mit einem Blendrahmen (2) sowie mit einem Beschlagteil (11), welches mittels eines Verbindungselementes (14) an dem Blendrahmen (2) angebracht ist,
• wobei das Verbindungselement (14) einen Schaft (16) mit einer Schaftachse (17) aufweist und unter Drehen des Schaftes (16) um die Schaftachse (17) in einer in Längsrichtung der Schaftachse (17) verlaufenden Montagerichtung (15) aus einer Außerfunktionsstellung in eine Montagestellung bewegbar ist, wobei der Schaft (16) an der in Montagerichtung (15) gelegenen Seite einen selbstschneidenden axialen Schaftabschnitt (18) aufweist, auf den in Gegenrichtung der Montagerichtung (15) ein axialer Passungsabschnitt (21) des Schaftes (16) folgt, der seinerseits einen Durchmesser besitzt, der mit dem Durchmesser des selbstschneidenden axialen Schaftabschnittes (18) übereinstimmt oder der größer ist als dieser Durchmesser und
• wobei das Verbindungselement (14) in der Montagelage das Beschlagteil (11) an einem Beschlagteildurchtritt (26) durchsetzt und mit dem axialen Passungsabschnitt (21) des Schaftes (16) in eine mittels des selbstschneidenden axialen Schaftabschnittes (18) erstellte Passungsaufnahme (34) an dem Blendrahmen (2) eingreift,
**dadurch gekennzeichnet**
• **dass** an dem Verbindungselement (14) an der von dem selbstschneidenden axialen Schaftabschnitt (18) abliegenden Seite des axialen Passungsabschnittes (21) des Schaftes (16) ein axialer Gewindeabschnitt (22) des Schaftes (16) vorgesehen ist, welcher ein Außengewinde (23) aufweist, dessen Gewinde-Außendurchmesser größer ist als der Durchmesser des axialen Passungsabschnittes (21) des Schaftes (16) und
• **dass** das Verbindungselement (14) in der Montagelage an dem Außengewinde (23) des axialen Gewindeabschnittes (22) des Schaftes (16) in dem Beschlagteildurchtritt (26) des Beschlagteils (11) mit einem zugeordneten Innengewinde (28) des Beschlagteils (11) kämmt, dessen Gewinde-Innendurchmesser mit dem Durchmesser des axialen Passungsabschnittes (21) des Schaftes (16) übereinstimmt oder größer ist als dieser Durchmesser.

10. Blendrahmenanordnung nach Anspruch 9, **dadurch gekennzeichnet, dass** an dem Verbindungselement (14) zwischen dem selbstschneidenden axialen Schaftabschnitt (18) und dem axialen Passungsabschnitt (21) des Schaftes (16) ein gegenüber dem selbstschneidenden axialen Schaftabschnitt (18) durchmesserreduzierter axialer Zwischenabschnitt (19) des Schaftes (16) vorgesehen ist.

11. Blendrahmenanordnung nach Anspruch 9 oder 10, **dadurch gekennzeichnet, dass** an dem Verbindungselement (14) zwischen dem durchmesserreduzierten axialen Zwischenabschnitt (19) des Schaftes (16) und dem axialen Passungsabschnitt (21) des Schaftes (16) ein axialer Übergangsabschnitt (20) des Schaftes (16) vorgesehen ist, der sich in Gegenrichtung der Montagerichtung (15) des Verbindungselementes (14) stetig von einem Durchmesser, der wenigstens dem Durchmesser des durchmesserreduzierten Zwischenabschnittes (19) entspricht, bis maximal auf den Durchmesser des axialen Passungsabschnittes (21) des Schaftes (16) erweitert.

12. Blendrahmenanordnung nach einem der Ansprüche 9 bis 11, **dadurch gekennzeichnet, dass** an dem Verbindungselement (14) der axiale Passungsabschnitt (21) des Schaftes (16) glattwandig ausgebildet ist.

13. Blendrahmenanordnung nach einem der Ansprüche 9 bis 12, **dadurch gekennzeichnet, dass** an dem Verbindungselement (14) an der von dem axialen Passungsabschnitt (21) des Schaftes (16) abgewandten Seite des axialen Gewindeabschnittes (22) des Schaftes (16) eine Auflage, vorzugsweise ein Kopf (24), des Verbindungselementes (14) vorgesehen ist, welche bzw. welcher den axialen Gewindeabschnitt (22) des Schaftes (16) in radialer Richtung der Schaftachse (17) überragt.

14. Blendrahmenanordnung nach einem der Ansprüche 9 bis 13, **dadurch gekennzeichnet, dass** der Blendrahmen (2) ein Blendrahmen-Hohlprofil (30) aufweist und dass das Verbindungselement (14) in der Montagelage mit dem axialen Passungsabschnitt (21) des Schaftes (16) in eine mittels des selbstschneidenden axialen Schaftabschnittes (18) erstellte Passungsaufnahme (34) an dem Blendrahmen-Hohlprofil (30) eingreift und mit dem selbstschneidenden axialen Schaftabschnitt (18) in einem Hohlraum (32) im Innern des Blendrahmen-Hohlprofils (30) angeordnet ist.

15. Blendrahmenanordnung nach einem der Ansprüche 9 bis 14, **dadurch gekennzeichnet, dass** das Beschlagteil (11) mittels eines zusätzlich zu dem Verbindungselement (14) vorgesehenen Befestigungsmittels (12, 13) an dem Blendrahmen (2) angebracht ist, wobei über das zusätzliche Befestigungsmittel (12, 13) eine in Gegenrichtung der Montagerichtung (15) des Verbindungselementes (14) wirksame Verbindung zwischen dem Beschlagteil (11) und dem Blendrahmen (2) hergestellt ist.

16. Blendrahmenanordnung nach einem der Ansprüche 9 bis 15, **dadurch gekennzeichnet, dass** als Beschlagteil ein Widerlagerbock (11) einer Verstelleinrichtung (7) eines Funktionsbeschlages (3) vorgesehen ist, mittels dessen ein Flügel mit dem Blendrahmen (2) relativ zu diesem bewegbar verbunden ist.

17. Fenster, Tür oder dergleichen mit einer Flügelanordnung gemäß einem der Ansprüche 1 bis 8 und/oder mit einer Biendrahmenanordnung gemäß einem der Ansprüche 9 bis 16.

## Claims

1. Leaf arrangement of a window (1), a door or the like, having a leaf and having a fitting part (11) which is fitted to the leaf by means of a connection element (14),
• the connection element (14) having a shaft (16) having a shaft axis (17) and being movable from a non-functional position into an assembly position in an assembly direction (15) which extends in a longitudinal direction of the shaft axis (17), with the shaft (16) being rotated about the shaft axis (17), the shaft (16) having, at the side located in the assembly direction (15), a self-cutting axial shaft portion (18), which an axial fitting portion (21) of the shaft (16) follows in the direction counter to the assembly direction (15) and itself has a diameter which corresponds to the diameter of the self-cutting axial shaft portion (18) or which is greater than that diameter and
• the connection element (14) in the assembly position extending through the fitting part (11) at a fitting part opening (26) and engaging with the axial fitting portion (21) of the shaft (16) in a fitting receiving member (34) on the leaf produced by means of the self-cutting axial shaft portion (18),
**characterised in that**
• there is provided, at the connection element (14) at the side of the axial fitting portion (21) of the shaft (16), which side is remote from the self-cutting axial shaft portion (18), an axial thread portion (22) of the shaft (16) which has an outer thread (23) whose outer thread diameter is greater than the diameter of the axial fitting portion (21) of the shaft (16) and
• **in that** the connection element (14) in the assembly position engages, by means of the outer thread (23) of the axial thread portion (22) of the shaft (16) in the fitting part opening (26) of the fitting part (11), with an associated inner thread (28) of the fitting part (11) whose inner thread diameter corresponds to the diameter of the axial fitting portion (21) of the shaft (16) or is greater than that diameter.

2. Leaf arrangement according to claim 1, **characterised in that** there is provided, on the connection element (14) between the self-cutting axial shaft portion (18) and the axial fitting portion (21) of the shaft (16), an axial intermediate portion (19) of the shaft (16), which portion is of reduced diameter relative to the self-cutting axial shaft portion (18).

3. Leaf arrangement according to either of the preceding claims, **characterised in that** there is provided, on the connection element (14) between the axial intermediate portion (19) of the shaft (16), which portion is of reduced diameter, and the axial fitting portion (21) of the shaft (16), an axial transition portion (20) of the shaft (16) which constantly increases, in the direction counter to the assembly direction (15) of the connection element (14), from a diameter which at least corresponds to the diameter of the intermediate portion (19) of reduced diameter up to a maximum of the diameter of the axial fitting portion (21) of the shaft (16).

4. Leaf arrangement according to any one of the preceding claims, **characterised in that** the axial fitting portion (21) of the shaft (16) is constructed on the connection element (14) so as to have smooth walls.

5. Leaf arrangement according to any one of the preceding claims, **characterised in that** a support, preferably a head (24), of the connection element (14) is provided on the connection element (14) at the side of the axial thread portion (22) of the shaft (16) remote from the axial fitting portion (21) of the shaft (16), and protrudes beyond the axial thread portion (22) of the shaft (16) in a radial direction of the shaft axis (17).

6. Leaf arrangement according to any one of the preceding claims, **characterised in that** the leaf has a hollow leaf profile and **in that** the connection element (14) in the assembly position engages with the axial fitting portion (21) of the shaft (16) in a fitting receiving member (34) on the hollow leaf profile produced by means of the self-cutting axial shaft portion (18), and is arranged with the self-cutting axial shaft portion (18) in a cavity (32) inside the hollow leaf profile.

7. Leaf arrangement according to any one of the preceding claims, **characterised in that** the fitting part (11) is fitted to the leaf by way of a fixing means (12, 13) which is provided in addition to the connection element (14), with a connection which acts in a direction counter to the assembly direction (15) of the connection element (14) being produced between the fitting part (11) and the leaf by way of the additional fixing means (12, 13).

8. Leaf arrangement according to any one of the preceding claims, **characterised in that** an abutment support (11) of an adjustment device (7) of a functional fitting (3) is provided as the fitting part and the leaf is thereby connected to a frame (2) so as to be movable relative thereto.

9. Frame arrangement of a window (1), a door or the like, having a frame (2) and having a fitting part (11) which is fitted to the frame (2) by means of a connection element (14),
• the connection element (14) having a shaft (16) having a shaft axis (17) and being movable out of a non-functional position into an assembly position in an assembly direction (15) which extends in a longitudinal direction of the shaft axis (17), with the shaft (16) being rotated about the shaft axis (17), the shaft (16) having, at the side located in the assembly direction (15), a self-cutting axial shaft portion (18), which an axial fitting portion (21) of the shaft (16) follows in the direction counter to the assembly direction (15) and itself has a diameter which corresponds to the diameter of the self-cutting axial shaft portion (18) or is greater than that diameter and
• the connection element (14) in the assembly position extending through the fitting part (11) at a fitting part opening (26) and engaging with the axial fitting portion (21) of the shaft (16) in a fitting receiving member (34) on the frame (2) produced by means of the self-cutting axial shaft portion (18),
**characterised in that**
• there is provided, on the connection element (14) at the side of the axial fitting portion (21) of the shaft (16), which side is remote from the self-cutting axial shaft portion (18), an axial thread portion (22) of the shaft (16) which has an outer thread (23) whose outer thread diameter is greater than the diameter of the axial fitting portion (21) of the shaft (16) and
• **in that** the connection element (14) in the assembly position engages, by means of the outer thread (23) of the axial thread portion (22) of the shaft (16), in the fitting part opening (26) of the fitting part (11) with an associated inner thread (28) of the fitting part (11) whose inner thread diameter corresponds to the diameter of the axial fitting portion (21) of the shaft (16) or is greater than that diameter.

10. Frame arrangement according to claim 9, **characterised in that** an axial intermediate portion (19) of the shaft (16), which portion is of reduced diameter relative to the self-cutting axial shaft portion (18), is provided on the connection element (14) between the self-cutting axial shaft portion (18) and the axial fitting portion (21) of the shaft (16).

11. Frame arrangement according to claim 9 or claim 10, **characterised in that** there is provided, on the connection element (14) between the axial intermediate portion (19) of the shaft (16) of reduced diameter and the axial fitting portion (21) of the shaft (16), an axial transition portion (20) of the shaft (16) which constantly increases, in a direction counter to the assembly direction (15) of the connection element (14), from a diameter which corresponds at least to the diameter of the intermediate portion (19) of reduced diameter up to a maximum of the diameter of the axial fitting portion (21) of the shaft (16).

12. Frame arrangement according to any one of claims 9 to 11, **characterised in that** the axial fitting portion (21) of the shaft (16) is constructed on the connection element (14) so as to have smooth walls.

13. Frame arrangement according to any one of claims 9 to 12, **characterised in that** a support, preferably a head (24), of the connection element (14) is provided on the connection element (14) at the side of the axial thread portion (22) of the shaft (16), which side is remote from the axial fitting portion (21) of the shaft (16), and protrudes beyond the axial thread portion (22) of the shaft (16) in a radial direction of the shaft axis (17).

14. Frame arrangement according to any one of claims 9 to 13, **characterised in that** the frame (2) has a frame hollow profile (30) and **in that** the connection element (14) in the assembly position engages with the axial fitting portion (21) of the shaft (16) in a fitting receiving member (34) on the frame hollow profile (30) produced by means of the self-cutting axial shaft portion (18) and is arranged with the self-cutting axial shaft portion (18) in a cavity (32) inside the frame hollow profile (30).

15. Frame arrangement according to any one of claims 9 to 14, **characterised in that** the fitting part (11) is fitted to the frame (2) by way of a fixing means (12, 13) which is provided in addition to the connection element (14), with a connection which acts in a direction counter to the assembly direction (15) of the connection element (14) being produced between the fitting part (11) and the frame (2) by way of the additional fixing means (12, 13).

16. Frame arrangement according to any one of claims 9 to 15, **characterised in that** an abutment support (11) of an adjustment device (7) of a functional fitting (3) is provided as the fitting part and a leaf is thereby connected to the frame (2) so as to be movable relative thereto.

17. Window, door or the like, having a leaf arrangement according to any one of claims 1 to 8 and/or having a frame arrangement according to any one of claims 9 to 16.

## Revendications

1. Ensemble structurel à battant équipant une fenêtre (1), une porte ou un objet similaire, comprenant un battant, ainsi qu'une pièce de ferrure (11) implantée sur ledit battant au moyen d'un élément de liaison (14),
• sachant que ledit élément de liaison (14) comporte un fût (16) qui présente un axe (17), et peut être amené d'une position de non-fonctionnement à une position de montage, dans une direction de montage (15) s'étendant dans le sens longitudinal de l'axe (17) du fût, par rotation dudit fût (16) autour dudit axe (17), lequel fût (16) comporte, du côté situé dans la direction de montage (15), un tronçon axial taraudeur (18) auquel succède, en sens inverse de la direction de montage (15), un tronçon axial d'ajustement (21) du fût (16) possédant, pour sa part, un diamètre qui coïncide avec le diamètre dudit tronçon axial taraudeur (18), ou est supérieur à ce diamètre, et
• sachant que ledit élément de liaison (14) traverse la pièce de ferrure (11) dans la direction de montage, au niveau d'un passage (26) pratiqué dans ladite pièce de ferrure, et pénètre, par le tronçon axial d'ajustement (21) du fût (16), dans un logement d'ajustement (34) situé sur le battant et façonné au moyen du tronçon axial taraudeur (18) dudit fût,
**caractérisé par le fait**
• **qu'**il est prévu sur l'élément de liaison (14), du côté du tronçon axial d'ajustement (21) du fût (16) tourné à l'opposé du tronçon axial taraudeur (18) dudit fût, un tronçon fileté axial (22) dudit fût (16) qui comporte un filetage extérieur (23) dont le diamètre extérieur est plus grand que le diamètre dudit tronçon axial d'ajustement (21) dudit fût (16) ; et
• **que**, dans la position de montage, l'élément de liaison (14) vient en prise dans le passage (26) de la pièce de ferrure (11), au niveau du filetage extérieur (23) du tronçon fileté axial (22) du fût (16), avec un filetage intérieur associé (28) de ladite pièce de ferrure (11), dont le diamètre intérieur coïncide avec le diamètre du tronçon axial d'ajustement (21) dudit fût (16), ou est supérieur à ce diamètre.

2. Ensemble structurel à battant selon la revendication 1, **caractérisé par** la présence sur l'élément de liaison (14), entre le tronçon axial taraudeur (18) du fût et le tronçon axial d'ajustement (21) dudit fût (16), d'un tronçon axial intermédiaire (19) dudit fût (16) dont le diamètre est réduit vis-à-vis de celui dudit tronçon axial taraudeur (18) dudit fût.

3. Ensemble structurel à battant selon l'une des revendications précédentes, **caractérisé par** la présence sur l'élément de liaison (14), entre le tronçon axial intermédiaire (19) du fût (16) à diamètre réduit, et le tronçon axial d'ajustement (21) dudit fût (16), d'un tronçon axial de transition (20) dudit fût (16) qui présente un évasement continu, en sens inverse de la direction de montage (15) dudit élément de liaison (14), à partir d'un diamètre correspondant au moins au diamètre dudit tronçon intermédiaire (19) à diamètre réduit, au maximum jusqu'au diamètre dudit tronçon axial d'ajustement (21) dudit fût (16).

4. Ensemble structurel à battant selon l'une des revendications précédentes, **caractérisé par le fait que** le tronçon axial d'ajustement (21) du fût (16) est de réalisation à paroi lisse sur l'élément de liaison (14).

5. Ensemble structurel à battant selon l'une des revendications précédentes, **caractérisé par** la présence sur l'élément de liaison (14), du côté du tronçon fileté axial (22) du fût (16) qui est tourné à l'opposé du tronçon axial d'ajustement (21) dudit fût (16), d'un appui revêtant, de préférence, la forme d'une tête (24) dudit élément de liaison (14), ledit appui ou ladite tête faisant respectivement saillie, dans la direction radiale de l'axe (17) du fût, au-delà dudit tronçon fileté axial (22) dudit fût (16).

6. Ensemble structurel à battant selon l'une des revendications précédentes, **caractérisé par le fait que** le battant offre un profilé creux ; et **par le fait que** l'élément de liaison (14) pénètre dans la position de montage, par le tronçon axial d'ajustement (21) du fût (16), dans un logement d'ajustement (34) façonné sur ledit profilé creux du battant au moyen du tronçon axial taraudeur (18) du fût, et est logé, par ledit tronçon axial taraudeur (18) dudit fût, dans une cavité (32) située à l'intérieur dudit profilé creux dudit battant.

7. Ensemble structurel à battant selon l'une des revendications précédentes, **caractérisé par le fait que** la pièce de ferrure (11) est implantée sur le battant à l'aide d'un moyen de fixation (12, 13) prévu en plus de l'élément de liaison (14), ledit moyen additionnel de fixation (12, 13) instaurant, entre ladite pièce de ferrure (11) et ledit battant, une liaison opérante en sens inverse de la direction de montage (15) dudit élément de liaison (14).

8. Ensemble structurel à battant selon l'une des revendications précédentes, **caractérisé par** la présence, en tant que pièce de ferrure, d'un sabot de contre-butée (11) d'un dispositif de réglage (7) d'une ferrure fonctionnelle (3) au moyen de laquelle le battant est relié à un dormant (2), avec faculté de mouvement par rapport à ce dernier.

9. Ensemble structurel à dormant équipant une fenêtre (1), une porte ou un objet similaire, comprenant un dormant (2), ainsi qu'une pièce de ferrure (11) implantée sur ledit dormant (2) au moyen d'un élément de liaison (14),
• sachant que ledit élément de liaison (14) comporte un fût (16) qui présente un axe (17), et peut être amené d'une position de non-fonctionnement à une position de montage, dans une direction de montage (15) s'étendant dans le sens longitudinal de l'axe (17) du fût, par rotation dudit fût (16) autour dudit axe (17), lequel fût (16) comporte, du côté situé dans la direction de montage (15), un tronçon axial taraudeur (18) auquel succède, en sens inverse de la direction de montage (15), un tronçon axial d'ajustement (21) du fût (16) possédant, pour sa part, un diamètre qui coïncide avec le diamètre dudit tronçon axial taraudeur (18), ou est supérieur à ce diamètre, et
• sachant que ledit élément de liaison (14) traverse la pièce de ferrure (11) dans la direction de montage, au niveau d'un passage (26) pratiqué dans ladite pièce de ferrure, et pénètre, par le tronçon axial d'ajustement (21) du fût (16), dans un logement d'ajustement (34) situé sur le dormant (2) et façonné au moyen du tronçon axial taraudeur (18) dudit fût,
**caractérisé par le fait**
• **qu'**il est prévu sur l'élément de liaison (14), du côté du tronçon axial d'ajustement (21) du fût (16) tourné à l'opposé du tronçon axial taraudeur (18) dudit fût, un tronçon fileté axial (22) dudit fût (16) qui comporte un filetage extérieur (23) dont le diamètre extérieur est plus grand que le diamètre dudit tronçon axial d'ajustement (21) dudit fût (16) ; et
• **que**, dans la position de montage, l'élément de liaison (14) vient en prise dans le passage (26) de la pièce de ferrure (11), au niveau du filetage extérieur (23) du tronçon fileté axial (22) du fût (16), avec un filetage intérieur associé (28) de ladite pièce de ferrure (11), dont le diamètre intérieur coïncide avec le diamètre du tronçon axial d'ajustement (21) dudit fût (16), ou est supérieur à ce diamètre.

10. Ensemble structurel à dormant selon la revendication 9, **caractérisé par** la présence sur l'élément de liaison (14), entre le tronçon axial taraudeur (18) du fût et le tronçon axial d'ajustement (21) dudit fût (16), d'un tronçon axial intermédiaire (19) dudit fût (16) dont le diamètre est réduit vis-à-vis de celui dudit tronçon axial taraudeur (18) dudit fût.

11. Ensemble structurel à dormant selon la revendication 9 ou 10, **caractérisé par** la présence sur l'élément de liaison (14), entre le tronçon axial intermédiaire (19) du fût (16) à diamètre réduit, et le tronçon axial d'ajustement (21) dudit fût (16), d'un tronçon axial de transition (20) dudit fût (16) qui présente un évasement continu, en sens inverse de la direction de montage (15) dudit élément de liaison (14), à partir d'un diamètre correspondant au moins au diamètre dudit tronçon intermédiaire (19) à diamètre réduit, au maximum jusqu'au diamètre dudit tronçon axial d'ajustement (21) dudit fût (16).

12. Ensemble structurel à dormant selon l'une des revendications 9 à 11, **caractérisé par le fait que** le tronçon axial d'ajustement (21) du fût (16) est de réalisation à paroi lisse sur l'élément de liaison (14).

13. Ensemble structurel à dormant selon l'une des revendications 9 à 12, **caractérisé par** la présence sur l'élément de liaison (14), du côté du tronçon fileté axial (22) du fût (16) qui est tourné à l'opposé du tronçon axial d'ajustement (21) dudit fût (16), d'un appui revêtant, de préférence, la forme d'une tête (24) dudit élément de liaison (14), ledit appui ou ladite tête faisant respectivement saillie, dans la direction radiale de l'axe (17) du fût, au-delà dudit tronçon fileté axial (22) dudit fût (16).

14. Ensemble structurel à dormant selon l'une des revendications 9 à 13, **caractérisé par le fait que** le dormant (2) offre un profilé creux (30) ; et **par le fait que** l'élément de liaison (14) pénètre dans la position de montage, par le tronçon axial d'ajustement (21) du fût (16), dans un logement d'ajustement (34) façonné sur ledit profilé creux (30) du dormant au moyen du tronçon axial taraudeur (18) du fût, et est logé, par ledit tronçon axial taraudeur (18), dans une cavité (32) située à l'intérieur dudit profilé creux (30) dudit dormant.

15. Ensemble structurel à dormant selon l'une des revendications 9 à 14, **caractérisé par le fait que** la pièce de ferrure (11) est implantée sur le dormant (2) à l'aide d'un moyen de fixation (12, 13) prévu en plus de l'élément de liaison (14), ledit moyen additionnel de fixation (12, 13) instaurant, entre ladite pièce de ferrure (11) et ledit dormant (2), une liaison opérante en sens inverse de la direction de montage (15) dudit élément de liaison (14).

16. Ensemble structurel à dormant selon l'une des revendications 9 à 15, **caractérisé par** la présence, en tant que pièce de ferrure, d'un sabot de contre-butée (11) d'un dispositif de réglage (7) d'une ferrure fonctionnelle (3) au moyen de laquelle un battant est relié au dormant (2), avec faculté de mouvement par rapport à ce dernier.

17. Fenêtre, porte ou objet similaire comportant un ensemble structurel à battant conforme à l'une des revendications 1 à 8, et/ou un ensemble structurel à dormant conforme à l'une des revendications 9 à 16.
